(19) Europäisches Patentamt
European Patent Office
Office européen des brevets

(11) **EP 2 368 098 B1**

(12) **FASCICULE DE BREVET EUROPEEN**

(45) Date de publication et mention de la délivrance du brevet:
**26.09.2018 Bulletin 2018/39**

(21) Numéro de dépôt: **09768128.2**

(22) Date de dépôt: **02.11.2009**

(51) Int Cl.:
*G01J 3/18* *(2006.01)*     *G01J 3/28* *(2006.01)*

(86) Numéro de dépôt international:
**PCT/FR2009/052114**

(87) Numéro de publication internationale:
**WO 2010/061090 (03.06.2010 Gazette 2010/22)**

(54) **SPECTROMETRE IMAGEUR DE TYPE DYSON DE QUALITE IMAGE AMELIOREE ET A FAIBLE DISTORSION**

BILDGEBUNGSSPEKTROMETER DES DYSON-TYPS MIT VERBESSERTER BILDQUALITÄT UND GERINGEN VERZERRUNGEN

DYSON-TYPE IMAGING SPECTROMETER HAVING IMPROVED IMAGE QUALITY AND LOW DISTORTION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **03.11.2008 FR 0857466**

(43) Date de publication de la demande:
**28.09.2011 Bulletin 2011/39**

(73) Titulaire: **Horiba France SAS**
**91160 Longjumeau (FR)**

(72) Inventeur: **DESSEROUER, Frédéric**
**F-91120 Palaiseau (FR)**

(74) Mandataire: **Jacobacci Coralis Harle**
**32, rue de l'Arcade**
**75008 Paris (FR)**

(56) Documents cités:
**US-B1- 6 266 140**

• **WARREN D W; GUTIERREZ D J; KEIM E R: "Dyson spectrometers for high-performance infrared applications" OPTICAL ENGINEERING, vol. 47, no. 10, 14 octobre 2008 (2008-10-14), pages 103601-1-103601-9, XP002515406**
• **FINK U ET AL: "APPLICATIONS OF HOLOGRAPHIC GRATINGS TO TWO-DIMENSIONAL SPECTROSCOPY" APPLIED OPTICS, OSA, OPTICAL SOCIETY OF AMERICA, WASHINGTON, DC, vol. 35, no. 7, 1 mars 1996 (1996-03-01), pages 1047-1055, XP000586020 ISSN: 0003-6935**

## Description

La présente invention concerne un spectromètre imageur de type Dyson de qualité image améliorée pour des applications dans le domaine de la spectrométrie et de l'imagerie hyperspectrale.

Dans ce document, on entend par spectromètre imageur un spectromètre apte à former une image d'une fente d'entrée résolue spatialement suivant la hauteur de cette fente et résolue spectralement pour chaque point image de cette fente. Les spectromètres imageurs comprennent en particulier les spectromètres pour l'imagerie hyperspectrale et les spectromètre à fibres optiques.

Plus particulièrement, l'invention concerne un spectromètre imageur amélioré pour former une image présentant une grande qualité image sur tout le champ image tout en ayant des distorsions spatiale et spectrale très faibles, afin d'obtenir une image de grande résolution spectrale et spatiale dans tout le champ image.

Il existe de nombreux montages optiques de spectromètres. Un spectromètre imageur comprend habituellement une fente d'entrée, un élément dispersif, qui est en général un réseau de diffraction ou un prisme, différents éléments optiques (lentilles ou miroirs) permettant de former l'image de la fente d'entrée sur un dispositif de détection (fente de sortie mobile et détecteur ou bien matrice de détecteurs linéaires ou 2D).

Certains domaines d'application de la spectrométrie nécessitent des appareils spectrométriques ayant des propriétés spécifiques d'imagerie. Un spectromètre imageur doit présenter une très bonne qualité d'imagerie, non seulement dans la dimension spectrale (qui est la qualité classique de résolution spectrale d'un spectromètre) mais aussi dans la dimension spatiale c'est-à-dire une bonne résolution spatiale suivant la direction de la fente d'entrée.

Un spectromètre imageur doit aussi présenter les propriétés suivantes :

- un grand champ, c'est à dire que la qualité image est conservée pour des hauteurs de fente importante,
- une grande ouverture numérique, afin de capter le maximum de lumière,
- une faible distorsion, pour un spectromètre imageur la distorsion peut être spectrale et/ou spatiale.

Un premier domaine nécessitant de tels spectromètres est l'imagerie hyperspectrale qui consiste à s'intéresser non plus seulement au spectre obtenu par la lumière entrant par l'intégralité de la fente d'entrée mais à étudier le spectre de chaque point spatialement distinct le long de la fente d'entrée. L'imagerie hyperspectrale s'est récemment développée grâce à de nouveaux détecteurs matriciels performants, offrant à la fois une très grande résolution grâce à des détecteurs élémentaires (pixels) ayant une taille de l'ordre de quelques microns et une très grande sensibilité. Un dispositif optique (généralement un télescope) forme l'image de la scène à analyser sur la fente d'entrée du spectromètre, chaque détail spatial de la scène le long de la fente d'entrée est ensuite analysé spectralement. La qualité de l'image produite par le spectromètre est donc primordiale aussi bien dans la direction de la dispersion spectrale qui détermine la capacité du système à discriminer deux longueurs d'onde proches que dans la direction spatiale qui permet de discriminer deux points objets très proches (ce qui correspond donc au détail de l'image dans la direction de la fente).

Dans un exemple d'application, un spectromètre pour imagerie hyperspectrale est monté sur un avion ou un satellite qui se déplace au dessus de la terre dans une direction perpendiculaire à la fente d'entrée. Le balayage de la scène est réalisé par le déplacement du spectromètre entier par rapport à la scène, ou bien par un système d'imagerie en avant du spectromètre, la fente d'entrée restant fixe. A chaque position du spectromètre (ou du système de balayage) correspond une colonne image de la fente d'entrée. A partir d'un ensemble de colonnes images, le système peut reconstituer une image de l'ensemble de la scène à des centaines de longueurs d'onde différentes (suivant la discrétisation du spectre choisi pour l'analyse).

Un second domaine d'applications concerne les spectromètres à fibres optiques, dans lesquels la fente d'entrée est remplacée par un grand nombre de fibres optiques alignées formant ainsi une fente d'entrée constituée de la juxtaposition d'une multitude de petites sources quasi-ponctuelles. Un spectromètre à fibres permet l'analyse spectrale d'un très grand nombre d'échantillons (un échantillon par fibre) et en simultané (analyse en parallèle) sur un seul détecteur matriciel. Une ligne de pixels ou un groupe de lignes de pixels analyse le spectre correspondant à l'image d'une fibre optique d'entrée sur le détecteur matriciel. Il est alors essentiel de fournir une analyse spectrale indépendante pour chaque fibre. Un spectromètre à fibre doit aussi présenter une très bonne qualité image et une faible distorsion à la fois dans la dimension spectrale et dans la dimension spatiale.

On connaît un type de spectromètre imageur ayant certaines des propriétés recherchées, il s'agit des spectromètres concentriques réflectifs ou réfractifs décrits dans la littérature par Mertz (1977) et Thévenon (Brevet FR 2 653 879). Le spectromètre entièrement réflectif est basé sur un montage imageur inventé par Offner (1973), ce spectromètre est donc communément appelé un spectromètre Offner. Un spectromètre Offner comprend un réseau de diffraction convexe et un ou deux miroirs concaves (d'entrée et de sortie), concentriques du réseau de diffraction. Un spectromètre imageur Offner a généralement une bonne résolution spectrale, une bonne luminosité et une faible distorsion. Toutefois, un montage spectromètre imageur Offner est encombrant, ce qui signifie un coût supplémentaire pour l'embarquement d'un tel spectromètre dans un satellite.

Un spectromètre imageur comprenant un élément optique réfractif est basé sur un montage inventé par Dyson (1959), le spectromètre associé est donc communément appelé un spectromètre Dyson. Le spectromètre Dyson proposé par Mertz dans Applied Optics en 1977 comprend une lentille demi-boule associée à un réseau de diffraction concave dans un montage concentrique. Ce type de montage est connu pour avoir une plus grande ouverture numérique puisqu'il tire avantage du fait que la fente d'entrée et le plan image sont dans ou sont très proches du verre constituant la lentille. Les spectromètres de type Dyson ont l'avantage d'être compacts. Toutefois, les spectromètres de type Dyson ont certains inconvénients : l'entrée et la sortie sont généralement placées sur la face d'entrée de la lentille ou dans son voisinage immédiat, ce qui peut être incompatible avec l'encombrement de certains détecteurs. En particulier, les détecteurs imageurs refroidis comprennent généralement une matrice de détecteurs placée dans une enceinte refroidie à une certaine distance derrière une fenêtre, si bien que la surface sensible de détection ne peut pas être placée dans le plan image de d'un spectromètre Dyson classique.

Le brevet EP 0862050 (Instruments SA) décrit un spectromètre de type Dyson utilisé pour former le spectre d'un port d'entrée sur un port de sortie et comprenant une lentille plan convexe, un réseau de diffraction concave à traits parallèles sur un support sphérique. Selon ce document, le spectromètre est amélioré en plaçant le port d'entrée et le port de sortie hors du plan méridien du réseau de diffraction pour diminuer la lumière parasite, l'entrée et la sortie restant sur la face plane de la lentille. Le document EP0862050 décrit également l'utilisation de deux ports d'entrée éloignés l'un de l'autre pour former deux spectres éloignés dans le plan de sortie sur deux détecteurs séparés. Toutefois, ce document ne décrit pas l'utilisation d'un tel spectromètre en imagerie. De plus, l'utilisation de ce spectromètre n'est pas compatible avec un détecteur imageur refroidi.

D'autres types de spectromètres utilisent uniquement un réseau de diffraction sans autre système optique réflectif ni réfractif de collimation et/ou de focalisation. Dans ces spectromètres, le réseau de diffraction remplit plusieurs fonctions : la fonction de dispersion spectrale et la fonction de collecte du flux d'entrée et/ou de focalisation du flux de sortie. Ces spectromètres peuvent être utilisés en imagerie, mais la qualité image dans le champ est beaucoup moins bonne et la distorsion est importante. Dans un tel spectromètre, un réseau de diffraction dont les traits ne sont pas parallèles et équidistants ou dont le support est asphérique peut permettre de corriger certaines aberrations. La Société Jobin Yvon a développé des réseaux holographiques particuliers optimisés pour des spectromètres non imageurs et sans optique réfractive. Ainsi, le document FR 2036613 décrit un dispositif spectroscopique comprenant un réseau de diffraction « corrigé » qui forme un spectre corrigé de l'aberration sphérique ou corrigé de l'astigmatisme à une longueur d'onde. Toutefois, le lieu de stigmatisme du spectre n'est pas une surface plane perpendiculaire à l'axe du réseau. Dans ces conditions, même avec un réseau corrigé des aberrations, la qualité image obtenue sur détecteur matriciel plan n'est pas très bonne.

Le document FR 2334947 décrit un spectromètre à champ plan, dont le réseau de diffraction est corrigé des aberrations de coma du 1er et du 2nd ordre et de l'astigmatisme. Toutefois, le spectromètre de FR 2334947 n'est pas corrigé de l'aberration sphérique, ni des aberrations de champ. De plus, le champ de sortie est plan, mais dans un plan incliné par rapport à l'axe du réseau, ce qui complique le positionnement du détecteur.

Les réseaux décrits dans les documents FR 2036613 et FR 2334947 sont certes corrigés des aberrations dans la dimension spectrale, mais rien n'indique que de tels réseaux de diffraction permettent de corriger simultanément des aberrations de champ dans une direction spatiale d'imagerie.

Le brevet EP 0179717 Jobin Yvon décrit un réseau holographique plan destiné à être utilisé dans un spectromètre à deux miroirs concaves, et dont les traits sont gravés de manière à être non équidistants et non parallèles pour améliorer la qualité image du spectromètre. Il s'agit toutefois d'un spectromètre à deux miroirs concaves, dont le montage est très encombrant.

Le document "Dyson spectrometers for high-performance infrared applications", Warren et al, Optical Engineering 47(10), 103601, October 2008 décrit un spectromètre Dyson utilisant un réseau holographique. Le brevet US6266140 B1 décrit un spectromètre concentrique utilisant un réseau de diffraction corrigé d'aberrations chromatiques.

Il n'est pas habituel d'utiliser un réseau dit « corrigé » dans un spectromètre concentrique ayant un système optique réfractif. On s'attend généralement à une meilleure qualité image dans un spectromètre comprenant un système optique à base de miroirs, du fait de l'absence d'aberrations chromatiques. L'optimisation d'un réseau de diffraction correspond à des degrés de liberté supplémentaires et est plus complexe à définir dans un spectromètre de type Dyson. De manière surprenante, cette optimisation du réseau permet à l'invention non seulement d'améliorer la qualité image mais aussi de définir des configurations de spectromètres plus pratiques, avec plus d'espace pour positionner la source et/ou le détecteur.

Un des buts de l'invention est de proposer un spectromètre imageur compact, ayant une très bonne qualité image et une faible distorsion.

Un autre but de l'invention est de fournir un spectromètre imageur de bonne qualité image et offrant une plus grande flexibilité pour le positionnement de la fente d'entrée et/ou du détecteur, notamment pour être compatible avec l'utilisation de détecteurs imageurs refroidis, qui ont une distance frontale non nulle.

Un autre but de l'invention est de proposer un spectromètre imageur de très grande résolution spectrale et spatiale sur un grand champ image.

La qualité image d'un spectromètre est évaluée par la mesure de la tache image d'un point objet à travers le spectromètre. Cette qualité image est évaluée par la mesure de différentes taches images correspondant à différents points objet. Généralement dans un spectromètre imageur, la qualité image est évaluée au centre du champ et à des points éloignés de l'axe, ainsi qu'aux longueurs d'onde centrale et extrêmes du spectre. Une méthode connue pour évaluer la taille d'une tache image est la méthode RMS, qui consiste à tracer numériquement un ensemble de rayons, et à mesurer numériquement la distance moyenne des rayons dans le plan image par rapport au point image à travers un système parfait. Il existe des logiciels capables de simuler la réponse numérique d'un système optique quelconque et d'optimiser certains des paramètres décrivant les composants optiques le constituant.

Le spectromètre selon l'invention est décrit par la revendication 1. La présente invention a pour but de remédier aux inconvénients des systèmes antérieurs et concerne plus particulièrement un spectromètre imageur de type Dyson comprenant un port d'entrée s'étendant selon une direction X dans un plan objet du spectromètre, ledit port d'entrée étant apte à émettre un faisceau lumineux incident, un réseau de diffraction comprenant un ensemble de traits sur un support concave, un système optique comprenant une lentille, ladite lentille comprenant une première face plane et une seconde face convexe, la face convexe de la lentille et la face concave du réseau de diffraction étant concentriques, ledit système optique étant apte à recevoir et à diriger le faisceau lumineux incident vers le réseau de diffraction, à recevoir un faisceau diffracté par le réseau de diffraction et à former une image spectrale dudit faisceau diffracté, ladite image spectrale s'étendant sur un champ image dans un plan image du spectromètre et un port de sortie dans le plan image du spectromètre, apte à recevoir une image du port d'entrée résolue spatialement selon une direction X' et résolue spectralement selon une direction Y'.

Selon l'invention, le réseau de diffraction comprend un ensemble de traits non parallèles et non équidistants et/ou le support du réseau de diffraction est asphérique de manière à améliorer la qualité image de l'image spectrale sur le champ image tout en minimisant les distorsions spectrales et de champ.

Selon l'invention, le réseau de diffraction comprend un ensemble de traits non parallèles et/ou non équidistants apte à former une image spectrale dans un champ plan dont la qualité image est améliorée, tout en maintenant faibles les distorsions spectrales et de champ.

Selon l'invention, la surface concave du réseau de diffraction est une surface ellipsoïdale de révolution.

Selon l'invention, le système optique réfractif comprend une lentille hémisphérique et une lame à faces planes et parallèles, ladite lame étant accolée à la face plane de la lentille et disposée sur le trajet optique du faisceau incident entre le port d'entrée et le réseau de diffraction, le plan objet du spectromètre étant situé sur une face de la lame et le plan image du spectromètre étant séparé de la lentille par un espace vide.

Les matériaux de la lentille et de la lame sont aptes à compenser la dispersion chromatique sur le champ de l'image.

Selon un autre mode de réalisation, la lentille est une lentille mince plan-convexe et les plans objet et image du spectromètre sont séparés de la face plane de la lentille par un espace vide. Avantageusement, l'espace vide a une épaisseur optique typiquement inférieure ou égale à 15% du rayon de courbure du réseau.

Avantageusement, le spectromètre comprend un détecteur matriciel disposé dans le plan image pour former une image spectrale du port d'entrée. Avantageusement, le spectromètre comprend une enceinte comprenant un détecteur et une fenêtre, la surface sensible du détecteur étant placée derrière ladite fenêtre, ladite enceinte étant apte à refroidir ledit détecteur. L'espace vide entre la lentille et le plan image permet notamment d'utiliser un détecteur refroidi souvent plus encombrant qu'un détecteur non refroidi.

Selon un mode de réalisation particulier, le spectromètre imageur comprend un ensemble de fibres optiques dont les extrémités sont alignées suivant un axe sur le port d'entrée et le détecteur est apte à former un spectre image correspondant respectivement à chaque fibre optique.

La présente invention concerne également les caractéristiques qui ressortiront au cours de la description qui va suivre et qui devront être considérées isolément ou selon toutes leurs combinaisons techniquement possibles.

Cette description est donnée à titre d'exemple non limitatif et fera mieux comprendre comment l'invention peut être réalisée en référence aux dessins annexés sur lesquels :

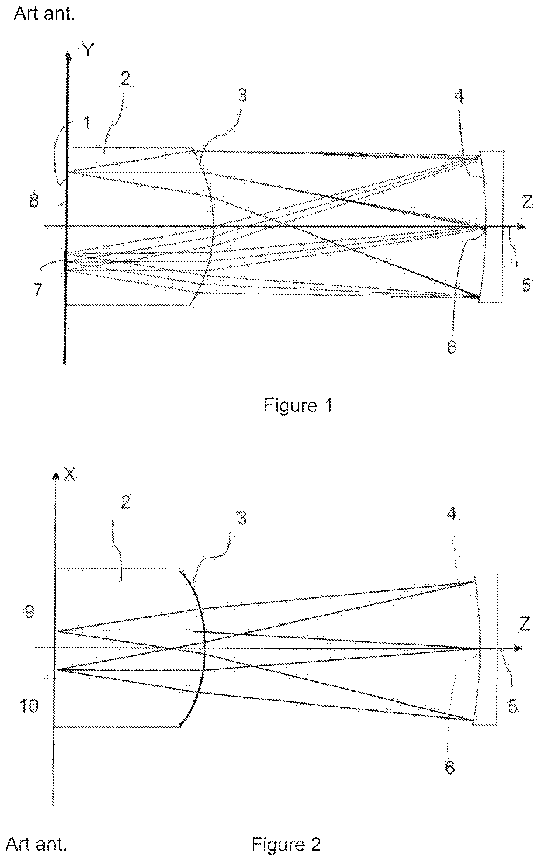

- la figure 1 est une vue en coupe dans le plan y-z (plan méridien) d'un spectromètre Dyson classique fonctionnant dans l'ordre -1, l'entrée et le spectre étalé en sortie étant placés sur (ou très proche de) la surface plane de la lentille ;

- la figure 2 est une vue en coupe dans le plan x-z d'un spectromètre Dyson classique fonctionnant dans l'ordre -1, les rayons sont tracés pour un point objet placés à 10 mm dans la direction x perpendiculaire au plan de diffraction. Les points objet et image sont de part et d'autre du plan méridien (plan y-z) ;

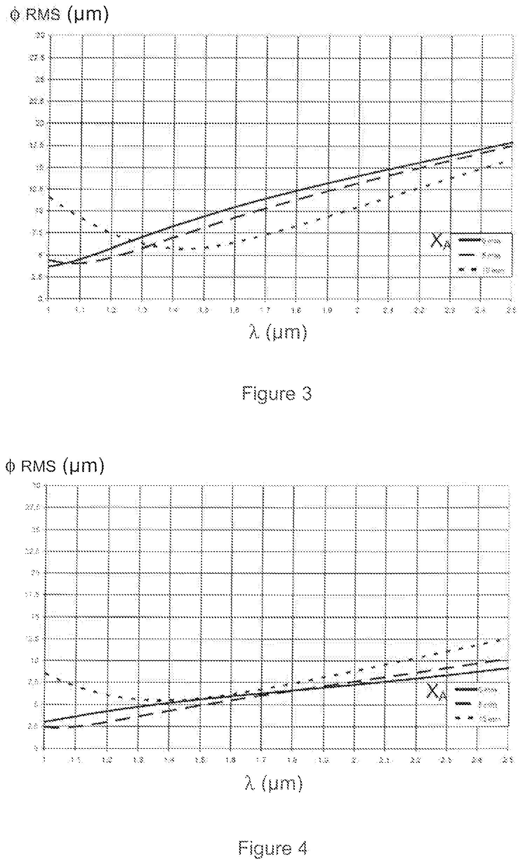

- la figure 3 illustre les performances en termes de qualité d'image d'un spectromètre Dyson classique de l'art antérieur. Ce graphique représente le rayon RMS (Root Min Square) de la tache image d'un point source dans le plan image, ou plan du détecteur. Le rayon RMS est donné pour trois positions du point source dans le champ objet (c'est-à-dire à trois positions en hauteur le long de la fente d'entrée) en fonction de la longueur d'onde;

- la figure 4 illustre les performances en termes de qualité d'image d'un spectromètre selon un mode de réalisation de l'invention utilisant un réseau de diffraction corrigé des aberrations dont les traits ne sont plus strictement parallèles et équidistants. Ce graphique représente le rayon RMS de la tache image pour trois positions du point source dans le champ objet en fonction de la longueur d'onde.

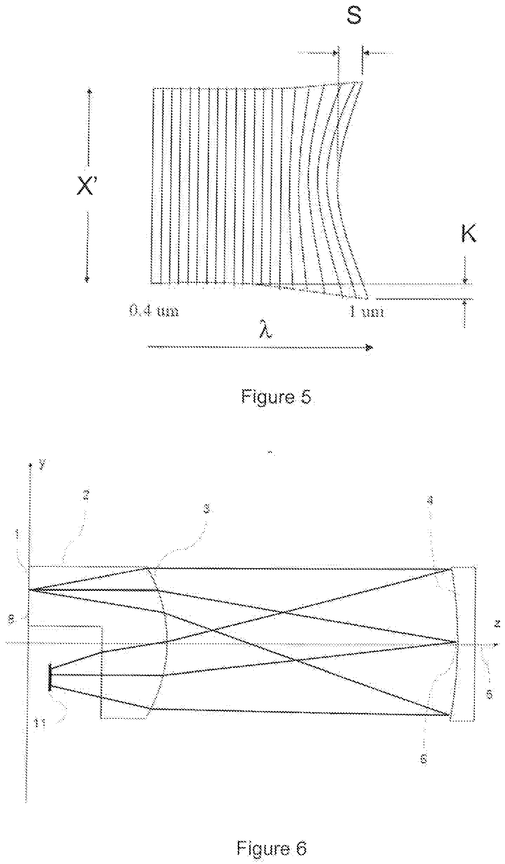

- la Figure 5 représente schématiquement les deux défauts de distorsion d'un spectromètre imageur dans le plan image : le Smile (S) et le Keystone (K).

- La Figure 6 présente une vue en coupe d'un mode de réalisation d'un spectromètre de type Dyson modifié selon l'invention, dans lequel le port d'entrée du spectromètre est sur ou très proche d'une face plane du système optique, et dans lequel le plan de focalisation image (plan du détecteur) est à une distance notable du système optique.

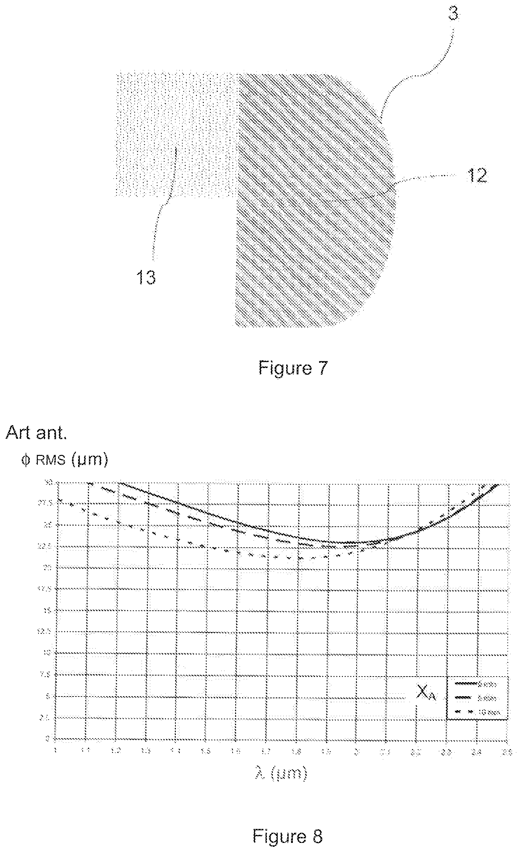

- La Figure 7 représente une vue en coupe un exemple de réalisation d'un système optique composé d'une lentille hémisphérique et d'une lame de verre, apte à être utilisé dans le spectromètre de la figure 6.

- La Figure 8 illustre les performances en termes de qualité d'image d'un montage Dyson classique qui serait utilisé avec le port d'entrée dans le verre du système optique et le port de sortie à une distance de 30 mm du verre.

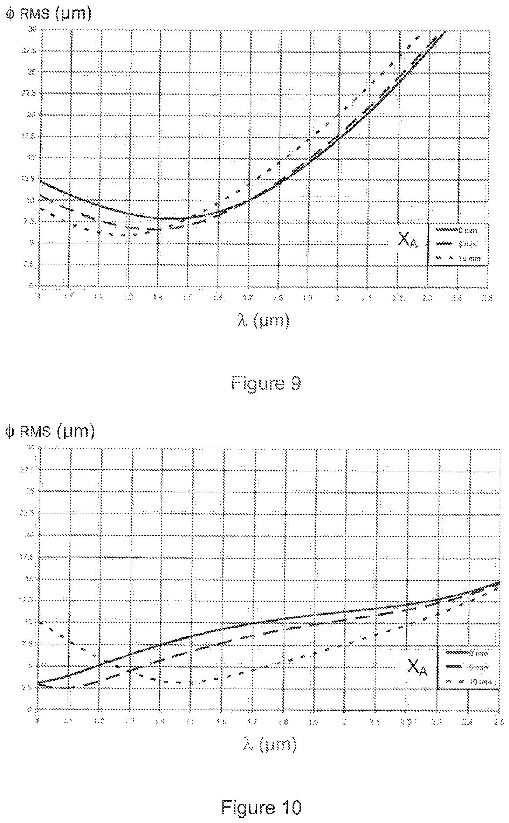

- La Figure 9 illustre les performances en termes de qualité d'image d'un montage selon un mode de réalisation de l'invention comprenant un réseau de diffraction gravé sur support asphérique (de type ellipsoïdal) et dans lequel les ports d'entrée et de sortie sont dans l'air à une distance de 30 mm du système optique.

- La Figure 10 illustre les performances en termes de qualité d'image d'un montage selon un autre mode de réalisation de l'invention comprenant un réseau de diffraction corrigé des aberrations et gravé sur support asphérique (type ellipsoïdal) et dans lequel les ports d'entrée et de sortie sont dans l'air à 30 mm du système optique.

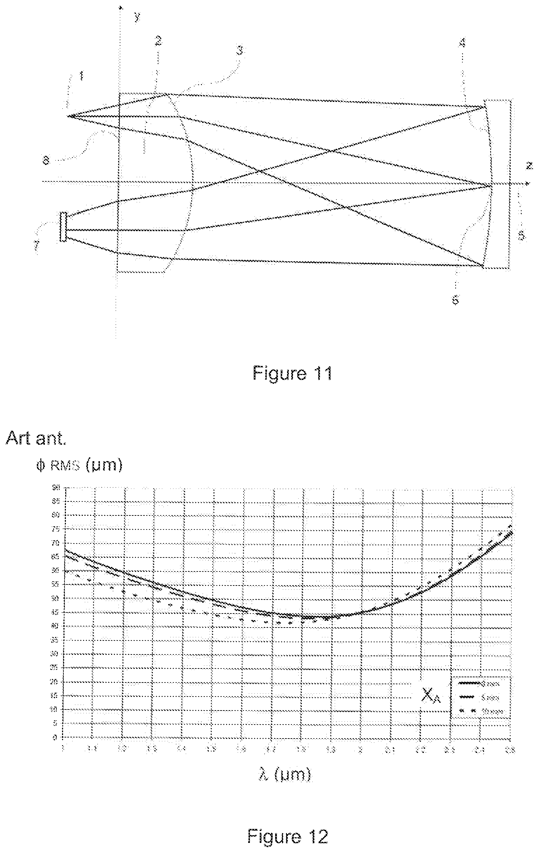

- La Figure 11 présente une vue en coupe d'un autre mode de réalisation d'un spectromètre de type Dyson modifié selon l'invention, comprenant une lentille plan-convexe simple et dans lequel le port d'entrée du spectromètre (comprenant une fente d'entrée ou un bundle de fibre optique) et le plan de focalisation image (plan du détecteur) sont à une distance notable de la lentille.

- La Figure 12 illustre les performances en termes de qualité d'image d'un montage Dyson classique comprenant un réseau de diffraction concave sphérique non corrigé des aberrations et utilisé avec l'entrée et la sortie dans l'air à 30 mm du verre de la lentille.

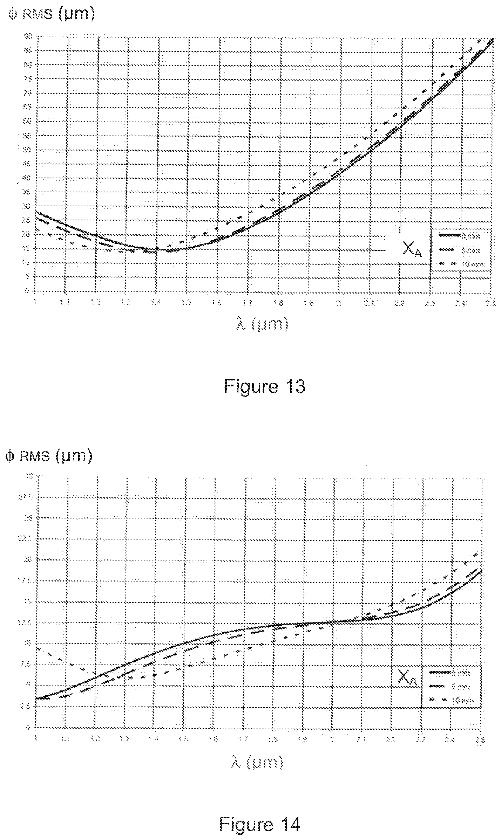

- La Figure 13 illustre les performances en termes de qualité d'image d'un montage selon un mode de réalisation de l'invention comprenant un réseau de diffraction concave non corrigé des aberrations gravé sur substrat asphérique (type ellipsoïdal) et dans lequel les ports d'entrée et de sortie sont dans l'air à une distance de 30 mm du système optique.

- La Figure 14 illustre les performances en termes de qualité d'image d'un montage selon un mode de réalisation de l'invention comprenant un réseau de diffraction concave corrigé des aberrations et gravé sur substrat asphérique (type ellipsoïdal) et dans lequel les ports d'entrée et de sortie sont dans l'air à une distance de 30 mm du système optique.

Pour la clarté de la mise en évidence des avantages de l'invention nous allons comparer différentes configurations de spectromètres ayant les caractéristiques suivantes communes :

- Ouverture numérique du faisceau d'entrée correspondant à un nombre d'ouverture dans l'air de F/2 : ON = 0,2425 ;
- Plage spectrale : 1000 nm à 2500 nm ;
- Hauteur de la fente d'entrée : 20 mm qui correspond donc au champ objet ;
- Grandissement : 1, qui est le grandissement nominal de ce type de montage ;
- Taille du détecteur : 10 mm dans la direction du spectre et 20 mm dans la direction spatiale ;
- Le rayon de courbure du réseau : 250 mm, cela fixe ainsi grossièrement l'encombrement du système et la densité de traits du réseau, ici environ 30 tr/mm.

La qualité image et la minimisation de la distorsion sont les critères d'évaluation de la qualité d'imagerie du système.

Le montage fonctionne dans l'ordre de diffraction -1 du réseau (ordre diffraction vers l'axe de symétrie du système).

Ces conditions fixes permettent de comparer objectivement les performances des différentes versions de spectromètres Dyson en imagerie.

Il est entendu que la présente invention n'est pas limitée à la configuration optique présentée dans l'exemple mais peut être étendue à tout montage de type Dyson utilisé dans tout ordre de diffraction.

La figure 1 représente un montage de spectromètre concentrique de type Dyson suivant une coupe dans un plan YZ transverse à la direction principale des traits du réseau. La figure 2 représente le même spectromètre que la figure 1, mais dans un plan XZ orthogonal au plan YZ.

Le spectromètre Dyson représenté figures 1 et 2 comprend une lentille plan convexe 2 et un réseau de diffraction concave 4 concentriques. Ce spectromètre Dyson comprend une fente d'entrée 1 ou un bundle de fibre optique dans un plan objet et un port de sortie 10 dans un plan image 7.

Le réseau concave 4 possède un plan méridien (YZ) passant par son sommet 6 et orthogonal à la direction principale de ses traits. La lentille 2 et le réseau 4 ont un axe optique commun 5 passant par leurs sommets respectifs et normal à leurs surfaces respectives. Les deux surfaces sphérique 3 et 4 ont ainsi leurs centres de courbure proches et sur l'axe Z 5, d'où l'appellation de spectromètre concentrique.

Dans le mode de réalisation représenté sur les figures 1 et 2, le plan objet et le plan image du spectromètre sont situés sur la face plane 8 de la lentille plan-convexe 2 qui est hémisphérique.

Un point source 9 situé sur la fente d'entrée 1 émet un faisceau de lumière polychromatique qui pénètre dans la lentille par sa face plane 8 proche ou bien confondue avec la fente d'entrée 1, le faisceau incident est ensuite réfractée par la surface sphérique 3 de la lentille 2 pour ensuite atteindre le réseau de diffraction 4 qui diffracte par réflexion un faisceau diffracté représenté schématiquement par un ensemble de faisceaux lumineux monochromatiques dirigés vers la lentille 2. Le faisceau lumineux diffracté est focalisé par la lentille 2 dans le plan image de sortie 7 à une position 10 par rapport au plan méridien (YZ), le spectre lumineux du faisceau diffracté est dispersé selon l'axe y.

Les performances en imagerie d'un tel système optimisé pour les paramètres indiqués plus haut sont illustrées figure 3. La qualité image est évaluée par le calcul du rayon quadratique moyen (RMS) de la tache image théorique obtenue par « ray-tracing » au travers du système à partir d'un point source. Ce calcul est fait pour trois points du champ $X_A = 0$ mm (le centre de la fente), $X_A = 5$ mm (à mi-hauteur de la fente), et $X_A = 10$ mm (à l'extrémité de la fente) et pour chaque longueur d'onde du spectre utile.

Le diamètre du rayon RMS est compris entre 3 et 18 $\mu$m sur tout le champ image.

La distorsion dans un système d'imagerie quelconque est aussi un paramètre important. Dans un spectromètre imageur la notion de distorsion est toujours importante mais elle se complique du fait de la dimension spectrale qui est introduite. On parle alors de deux défauts de distorsion le « Smile » ou S dans la dimension spectrale et le « Keystone» ou K dans la dimension spatiale comme le montre schématiquement la figure 5. Tous les montages utilisés pour illustrer l'invention ont une distorsion globale (Smile et Keystone) inférieure ou égale à 7 $\mu$m, ce qui est très faible.

La présente invention propose l'utilisation d'un réseau de diffraction 4 dit «corrigé » à la place du réseau de diffraction à traits parallèles et équidistants sur un support sphérique utilisé dans les montages antérieurs Dyson. On connaît depuis longtemps le réseau concave non corrigé dont les traits gravés qui le constituent sont parallèles et équidistants lorsqu'ils sont projetés sur le plan passant par le sommet 6 du réseau et orthogonal à l'axe 5.

Dans ce document, on entend par « réseau corrigé » un réseau de diffraction dont les traits ne sont pas équidistants et parallèles, mais dont le tracé des traits est optimisé de façon à ce que la qualité image du spectromètre soit globalement améliorée, compte tenu non seulement des aberrations du réseau, mais aussi de celles du système optique entre les ports d'entrée sortie.

Un premier mode de réalisation de l'invention repose sur l'utilisation d'un réseau de diffraction 4 concave dont les traits (ou sillons) ne sont ni exactement parallèles ni exactement équidistants. La densité de traits et la direction des traits sont légèrement modifiées selon le point de la surface du réseau 4 considéré de façon à améliorer la qualité image globale du spectromètre.

La densité locale des traits du réseau et la direction des traits sont optimisées numériquement de manière à minimiser le rayon RMS de la tache image tout en conservant des distorsions faibles sur le champ image. La fabrication d'un réseau ainsi optimisé est possible notamment par holographie, ainsi que sa réplication.

La figure 4 présente les performances en qualité image d'un spectromètre imageur Dyson utilisant un tel réseau selon un premier mode de réalisation de l'invention, dans lequel la lentille plan-convexe est une lentille hémisphérique, dont la face plane est située sur le plan objet et sur plan image du spectromètre.

La comparaison de la figure 3 et 4 montre bien l'amélioration en terme de qualité image apportée par l'utilisation d'un réseau concave corrigé dans un spectromètre de type Dyson. En effet, la taille de la tache image (Fig. 4) est ainsi en moyenne diminuée de 30% par rapport au spectromètre dont le réseau est un réseau à traits parallèles et équidistants sur une surface sphérique (Fig 3).

Un second mode de réalisation particulier de l'invention va être présenté en lien avec la figure 6.

Cette figure représente schématiquement un spectromètre Dyson dont le système optique de collimation et de focalisation est modifié. L'entrée 1 du spectromètre est dans ou très proche du verre de la lentille 2, mais ce qui diffère est que la sortie 11 est situé à une distance notable de la face de sortie de la lentille, dans notre exemple et nos calculs la distance entre le détecteur et le verre est de 30 mm. Le système optique réfractif illustré figure 7 comprend une lentille (plan convexe) assez fine 12 à laquelle est accolée une lame de verre 13 qui s'étend uniquement du côté de l'entrée du spectromètre imageur. Le verre de la lame 13 peut être identique à celui de la lentille 12 ou bien différent, par exemple pour permettre de réduire les aberrations chromatiques.

L'espace libre ainsi créé en sortie est particulièrement intéressant lorsque les détecteurs utilisés et leur technologie rendent impossible de les placer à proximité immédiate du verre principalement pour des problèmes d'encombrement. C'est en particulier le cas pour les détecteurs refroidis qui sont en général scellés dans une enceinte fermée par un hublot transparent et placé à une certaine distance de la surface sensible empêchant ainsi la mise en place de la surface sensible au voisinage immédiat de la lentille 2. Le système optique représenté figure 7 permet ainsi une utilisation facilitée de ce genre de détecteur.

Les courbes de la figure 8 illustrent les performances en terme de qualité image d'un spectromètre imageur ayant un réseau à traits parallèles et équidistants sur un support sphérique, le spectromètre comprenant le système optique représenté sur la figure 7, avec entrée dans le verre (ou très proche) et sortie dans l'air à une distance 30 mm de la face de sortie de la lentille. Ces performances illustrées figure 8 sont très dégradées par rapport au cas précédent où entrée et sortie sont dans le verre (figure 3 et figure 4). Le rayon RMS de la figure 8 est de l'ordre de 30 µm sur tout le spectre et pour les trois points image de la fente d'entrée.

Le second mode de réalisation de l'invention utilise un réseau de diffraction gravé sur un substrat asphérique. La surface asphérique nécessaire et réalisable par les moyens actuels de production est de type ellipsoïdal. Le substrat reste à symétrie de révolution autour de l'axe Z 5. Le profil asphérique de révolution est donné par la formule suivante :

$$h(r) = \frac{r^2/R}{1 + \sqrt{1 - (1+k)\left(\dfrac{r}{R}\right)^2}}$$

où h est l'élévation ;
R est le rayon de courbure ;
r la position radial du point considéré par rapport au centre 6 ;
k est la constante de conicité ;
pour une ellipse on a -1<k<0, pour k =0 il s'agit d'une sphère.

Dans un exemple du second mode de réalisation, le substrat du réseau de diffraction est asphérique avec un rayon de courbure 250 mm et une constante de conicité k=-0,125. Ce réseau permet d'aboutir à un spectromètre imageur dont la sortie est dans l'air à 30 mm du verre (figure 6) et ayant les performances en imagerie illustrées sur la figure 9. Le rayon RMS est diminué notamment pour des longueurs d'onde comprises entre 1 et 2 microns. Ce second mode de réalisation permet ainsi une importante amélioration de la qualité image par rapport au spectromètre évalué sur la figure 8.

Un troisième mode de réalisation de l'invention est un perfectionnement du seconde mode de réalisation. Le spectromètre comprend un système optique tel que décrit en lien avec la figure 6, avec entrée 1 dans le verre et sortie 11 dans l'air à 30 mm du verre. Selon ce perfectionnement le réseau de diffraction est gravé sur un substrat asphérique et corrigé des aberrations pour une optimisation de la qualité image globale du spectromètre.

La figure 10 présente les performances d'imagerie d'un spectromètre selon ce troisième mode de réalisation, avec un réseau de diffraction à traits non exactement parallèles et non exactement équidistants gravé sur un substrat asphérique de type ellipsoïdal ayant pour constante de conicité k=-0,139. Le rayon RMS est inférieur à 15 microns pour toutes les longueurs d'onde (de 1 à 2,5 µm) et sur tout le champ de l'image (point source de 0 à 10 mm).

La qualité d'imagerie (illustrée figure 10) d'un système conforme au 3ème mode de réalisation, qui utilise un réseau de diffraction à la fois corrigé des aberrations et gravé sur un substrat asphérique, est encore meilleure que le 2nd mode de réalisation illustré sur la figure 9.

Il est intéressant de noter qu'un spectromètre conforme au 3ème mode de réalisation rivalise quasiment en terme de qualité image avec un spectromètre ayant l'entrée et la sortie dans (ou très proche) du verre. L'invention permet donc une souplesse d'utilisation du montage Dyson en permettant l'ajout d'un espace d'air conséquent en sortie (1er mode de réalisation, dont les performances sont illustrées figure 4).

Un quatrième et un cinquième mode de réalisation de l'invention sont présentés dans le paragraphe suivant en lien avec les figures 11 à 14.

Le spectromètre imageur est utilisé comme représenté schématiquement sur la figure 11. L'entrée 1 et la sortie 7 du spectromètre imageur sont ici dans l'air à une distance notable (environ 30 mm) de la face plane de la lentille 2. La lentille 2 est une lentille plan-convexe beaucoup plus fine qu'une lentille hémisphérique donc moins chère et moins lourde.

La figure 12 présente un graphique représentatif de la qualité en imagerie d'un spectromètre utilisant un réseau de diffraction concave sphérique à traits parallèles et équidistants et une lentille plan convexe dont l'entrée et la sortie sont à une distance de 30 mm. Le rayon RMS est compris entre 45 et 80 microns sur toute la plage spectrale dans le champ image. La qualité image d'un tel dispositif est très fortement dégradée par rapport à tous les autres résultats présentés précédemment.

Selon un 4ème mode de réalisation, le spectromètre utilise un réseau de diffraction concave classique gravé sur un substrat asphérique, et plus particulièrement sur une surface ellipsoïdale de révolution, dont la constante de conicité vaut k=-0,248. Le graphique de la figure 13 représente la qualité en imagerie d'un spectromètre conforme à ce 4ème mode de réalisation. Le rayon RMS est diminué d'un facteur 2 (comparé à la figure 12) notamment pour les longueurs d'onde comprises entre 1 et 2 microns. L'asphérisation du substrat du réseau améliore ainsi notablement les performances (comparaison figure 12 et figure 13).

Selon un 5ème mode de réalisation, le spectromètre utilise un réseau de diffraction concave corrigé des aberrations gravé sur un substrat asphérique, et plus particulièrement sur une surface ellipsoïdale de révolution, dont la constante de conicité vaut k=-0,260. Le graphique de la figure 14 représente la qualité image d'un spectro-mètre conforme à ce 5ème mode de réalisation. L'asphérisation du substrat et la correction des aberrations permettent une amélioration spectaculaire des performances en imagerie du spectromètre selon ce 5ème mode de réalisation. Les performances illustrées figure 14 deviennent voisines de celles des meilleurs spectromètres présentés précédemment figure 3 malgré la distance de 30 mm entre le plan d'entrée-sortie et la face plane de la lentille 12.

Les 4ème et 5ème mode de réalisation de l'invention proposent un spectromètre imageur dont les performances en imagerie sont améliorées.

Les 4ème et 5ème modes de réalisation offrent une alternative intéressante au spectromètre Dyson standard où fente d'entrée et plan de sortie doivent être très proches de la face plane 8 de la lentille 2.

L'invention permet une amélioration en imagerie d'un spectromètre de type Dyson pour des applications en imagerie spectrale ou hyperspectrale grâce à l'utilisation d'un réseau de diffraction corrigé des aberrations et/ou dont la forme du substrat est asphérique.

Un réseau de diffraction corrigé des aberrations est un réseau dont les traits ne sont plus exactement parallèles et équidistants sur toute la surface du composant mais dont le tracé des traits est optimisé pour améliorer la qualité image (se rapprocher d'un système où l'image d'un point est un point) du spectromètre dans tout le champ image tout en minimisant la distorsion dans les dimensions spatiale et spectrale du champ image.

Les différents modes de réalisation de l'invention permettent l'amélioration d'un spectromètre imageur par l'utilisation combinée d'éléments réfractifs et diffractifs optimisés pour permettre une fonction d'imagerie de bonne qualité optique et de faible distorsion dans les dimensions spectrale et spatiale.

La présente invention apporte non seulement une amélioration de la qualité d'imagerie d'un spectromètre Dyson mais aussi une possibilité d'utilisation nouvelle de ce type de spectromètre avec fente d'entrée et/ou détecteur dans l'air à une distance notable de la lentille. Cette distance permet d'avoir plus d'espace en entrée et en sortie pour placer la source et le détecteur imageur. Cette configuration permet également d'utiliser un composant réfractif beaucoup plus compact qu'une lentille hémisphérique utilisée dans les spectromètres Dyson antérieurs.

L'utilisation d'un réseau à trait non parallèles et non équidistants dans un spectromètre de type Dyson est particulièrement intéressante pour de l'imagerie spectrale ou hyperspectrale. Selon un perfectionnement de l'invention, le réseau est fabriqué sur un support asphérique qui permet une amélioration supplémentaire des qualités d'imagerie du spectromètre.

**Revendications**

1. Spectromètre imageur de type Dyson comprenant :

   - un port d'entrée (1) s'étendant selon une direction X dans un plan objet du spectromètre, ledit port d'entrée étant apte à émettre un faisceau lumineux incident,
   - un réseau de diffraction (4) comprenant un ensemble de traits sur un support concave,
   - un système optique réfractif comprenant une lentille (2), ladite lentille comprenant une première face plane (8) et une seconde face convexe (3), la face convexe (3) de la lentille et la face concave du réseau de diffraction (4) étant concentriques, ledit système optique étant apte à recevoir et à diriger le faisceau lumineux incident vers le réseau de diffraction (4), à recevoir un faisceau diffracté par le réseau de diffraction et à former une image spectrale dudit faisceau diffracté, ladite image spectrale s'étendant sur un champ image dans un plan image du spectromètre,
   - un port de sortie, dans le plan image (7) du spectromètre, apte à recevoir une image du port d'entrée résolue spatialement selon une direction X' et résolue spectralement selon une direction Y',

   **caractérisé en ce que** :

   - ledit réseau de diffraction comprend un ensemble de traits non parallèles et non équidistants et/ou le support concave du réseau de diffraction est une surface asphérique ellipsoïdale de révolution, de manière à améliorer la qualité image de l'image spectrale sur le champ image tout en minimisant les distorsions spectrales et de champ,
   - le système optique comprend en outre une lentille hémisphérique et une lame (13) à faces planes et parallèles, ladite lame (13) étant accolée à la face plane (8) de la lentille (2) et disposée sur le trajet optique du faisceau incident entre le port d'entrée et le réseau de diffraction, le plan objet du spectromètre étant situé sur une face de la lame (13) et le plan image du spectromètre étant séparé de la lentille (2) par un espace vide,
   - les matériaux de la lentille (2) et de la lame (13) sont choisis de manière à compenser la dispersion chromatique sur le champ de l'image.

2. Spectromètre imageur selon la revendication 1 **caractérisé en ce que** le réseau de diffraction comprend un ensemble de traits non parallèles et/ou non équidistants apte à former une image spectrale dans un champ plan de qualité image améliorée sur le champ image, tout en maintenant faibles les distorsions spectrales et de champ.

**3.** Spectromètre imageur selon l'une des revendications 1 à 2 **caractérisé en ce que** la lentille (2) est une lentille mince plan-convexe et **en ce que** les plans objet et image du spectromètre sont séparés de la face plane (8) de la lentille (2) par un espace vide d'épaisseur optique typiquement inférieure ou égale à 15% du rayon de courbure du réseau (4).

**4.** Spectromètre imageur selon l'une des revendications 1 à 3 **caractérisé en ce qu'**il comprend un détecteur matriciel disposé dans le champ image pour former une image spectrale du port d'entrée.

**5.** Spectromètre imageur selon l'une des revendications 1 à 4 **caractérisé en ce qu'**il comprend une enceinte comprenant un détecteur et une fenêtre, la surface sensible du détecteur étant placée derrière ladite fenêtre, ladite enceinte étant apte à refroidir ledit détecteur.

**6.** Spectromètre imageur selon l'une des revendications 1 à 5 **caractérisé en ce que** le port d'entrée comprend un ensemble de fibres optiques alignées suivant un axe et **en ce que** le détecteur est apte à former un spectre image de chaque fibre optique.

**Patentansprüche**

**1.** Bildgebungsspektrometer mit

- einem Eingangsanschluß (1), der sich in einer X-Richtung in einer Gegenstandsebene des Spektrometers erstreckt, wobei der Eingangsanschluß dazu ausgelegt ist, einen einfallenden Lichtstrahl auszusenden,
- einem Beugungsgitter (4), das eine Gesamtheit von Linien auf einem konkaven Träger aufweist,
- einem optischen Beugungssystem, das eine Linse (2) aufweist, wobei die Linse eine erste ebene Seite (8) und eine zweite konvexe Seite (3) aufweist, wobei die konvexe Seite (3) der Linse und die konkave Seite des Beugungsgitters (4) konzentrisch sind, wobei das optische System dazu ausgelegt ist, den einfallenden Lichtstrahl zu empfangen und auf das Beugungsgitter (4) zu richten, einen durch das Beugungsgitter gebeugten Strahl zu empfangen und ein spektrales Bild des gebeugten Strahls zu bilden, wobei sich das spektrale Bild über ein Bildfeld in einer Bildebene des Spektrometers erstreckt,
- einem Ausgangsanschluß in der Bildebene (7) des Spektrometers, der dazu ausgelegt ist, ein in einer Richtung X' räumlich und in einer Richtung Y' spektral aufgelöstes Bild des Eingangsanschlusses zu empfangen,

**dadurch gekennzeichnet, daß** .

- das Beugungsgitter eine Gesamtheit von nicht parallelen und nicht gleich beabstandeten Linien aufweist und/oder der konkave Träger des Beugungsgitters eine asphärische ellipsenförmige Rotationsfläche ist, um die Bildqualität des spektralen Bilds auf dem Bildfeld zu verbessern und gleichzeitig die spektralen und die Feldverzerrungen zu minimieren,
- das optische System außerdem eine hemisphärische Linse und ein Plättchen (13) mit ebenen und parallelen Seiten aufweist, wobei das Plättchen (13) an der ebenen Seite (8) der Linse (2) anliegt und auf dem optischen Weg des einfallenden Strahls zwischen dem Eingangsanschluß und dem Beugungsgitter angeordnet ist, wobei die Gegenstandsebene des Spektrometers auf einer Seite des Plättchens (13) liegt und die Bildebene des Spektrometers durch einen freien Raum von der Linse (2) getrennt ist,
- wobei die Materialien der Linse (2) und des Plättchens (13) so ausgewählt sind, daß sie die chromatische Streuung auf dem Bildfeld ausgleichen.

**2.** Bildgebungsspektrometer gemäß Anspruch 1, **dadurch gekennzeichnet, daß** das Beugungsgitter eine Gesamtheit von nicht parallelen und nicht gleich beabstandeten Linien aufweist, die dazu ausgelegt sind, auf einem ebenen Feld ein spektrales Bild mit auf dem Bildfeld verbesserter Bildqualität zu bilden und dabei die spektralen und die Feldverzerrungen gering zu halten.

**3.** Bildgebungsspektrometer gemäß einem der Ansprüche 1 bis 2, **dadurch gekennzeichnet, daß** die Linse (2) eine plankonvexe dünne Linse ist und daß die Gegenstandsebene und die Bildebene des Spektrometers von der ebenen Seite (8) der Linse (2) durch einen freien Raum mit einer optischen Dicke, die typischerweise kleiner als oder gleich 15 % des Krümmungsradius des Gitters (4) beträgt, getrennt ist.

**4.** Bildgebungsspektrometer gemäß einem der Ansprüche 1 bis 3, **dadurch gekennzeichnet, daß** es einen matrixförmigen Detektor aufweist, der im Bildfeld angeordnet ist, um ein spektrales Bild des Eingangsanschlusses zu bilden.

**5.** Bildgebungsspektrometer gemäß einem der Ansprüche 1 bis 4, **dadurch gekennzeichnet, daß** es ein Gehäuse mit einem Detektor und einem Fenster aufweist, wobei die strahlungsempfindliche Fläche des Detektors hinter dem Fenster angeordnet ist, wobei das Gehäuse dazu ausgelegt ist, den Detektor zu kühlen.

6. Bildgebungsspektrometer gemäß einem der Ansprüche 1 bis 5, **dadurch gekennzeichnet, daß** der Eingangsanschluß eine Gesamtheit von entlang einer Achse ausgerichteten optischen Fasern aufweist und daß der Detektor dazu ausgelegt ist, ein spektrales Bild jeder optischen Faser zu bilden.

**Claims**

1. A Dyson imaging spectrometer comprising:

• an entry port (1) extending in a direction X in an object plane of the spectrometer, said entry port being adapted to emit an incident light beam;
• a diffraction grating (4) comprising a set of lines on a concave support;
• a refractive optical system comprising a lens (2), said lens comprising a plane first face (8) and a convex second face (3), the convex face (3) of the lens and the concave face of the diffraction grating (4) being concentric, said optical system being adapted to receive the incident light beam and to direct it toward the diffraction grating (4), to receive a beam diffracted by the diffraction grating, and to form a spectral image of said diffracted beam, said spectral image lying in an image field in an image plane of the spectrometer; and
• an exit port in the image plane (7) of the spectrometer adapted to receive an image of the entry port spatially resolved in a direction X' and spectrally resolved in a direction Y';

**characterized in that**:

said diffraction grating comprises a set of non-parallel and non-equidistant lines and/or the support of the diffraction grating is an aspherical ellipsoidal surface of revolution in order to improve the image quality of the spectral image in the image field at the same time as minimizing spectral and field distortions,

• the optical system further comprises a hemispherical lens (2) and a plate (13) with plane and parallel faces, said plate (13) lying against the plane face (8) of the lens (2) and being disposed on the optical path of the incident beam between the entry port and the diffraction grating, the object plane of the spectrometer being situated on one face of the plate (13) and the image plane of the spectrometer being separated from the lens (2) by a gap,
• the materials of the lens (2) and the plate (13) being chosen to compensate chromatic dispersion over the image field.

2. An imaging spectrometer according to claim 1, **characterized in that** the diffraction grating comprises a set of non-parallel and/or non-equidistant lines adapted to form a spectral image in an image field of improved image quality in the image field at the same time as maintaining low spectral and field distortion.

3. An imaging spectrometer according to any one of claims 1 to 2, **characterized in that** the lens (2) is a thin plano-convex lens and the object and image planes of the spectrometer are separated from the plane face (8) of the lens (2) by a gap of optical thickness typically less than or equal to 15% of the radius of curvature of the grating (4).

4. An imaging spectrometer according to any one of claims 1 to 3, **characterized in that** it comprises a matrix sensor disposed in the image field to form a spectral image of the entry port.

5. An imaging spectrometer according to any one of claims 1 to 4, **characterized in that** it comprises an enclosure comprising a sensor and a window, the sensitive surface of the sensor being placed behind said window and said enclosure being adapted to cool said sensor.

6. An imaging spectrometer according to any one of claims 1 to 5, **characterized in that** the entry port comprises a set of optical fibers aligned with an axis and the sensor is adapted to form an image spectrum of each optical fiber.

Art ant.

Figure 1

Art ant.         Figure 2

φ RMS (μm)

λ (μm)

Figure 3

φ RMS (μm)

λ (μm)

Figure 4

Figure 5

Figure 6

Figure 7

Art ant.

ϕ RMS (µm)

λ (µm)

Figure 8

φ RMS (µm)

λ (µm)

Figure 9

φ RMS (µm)

λ (µm)

Figure 10

Figure 11

Art ant.

φ RMS (µm)

λ (µm)

Figure 12

φ RMS (µm)

Figure 13

φ RMS (µm)

Figure 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2653879
- EP 0862050 A
- FR 2036613

- FR 2334947
- EP 0179717 A, Jobin Yvon
- US 6266140 B1

**Littérature non-brevet citée dans la description**

- **DYSON.** le spectromètre associé est donc communément appelé un spectromètre Dyson. *Le spectromètre Dyson,* 1959
- **MERTZ.** *Applied Optics,* 1977

- **WARREN et al.** Dyson spectrometers for high-performance infrared applications. *Optical Engineering,* Octobre 2008, vol. 47 (10), 103601